# FASCICULE DE BREVET EUROPEEN

(11) **EP 1 153 396 B1**
(45) Date de publication et mention de la délivrance du brevet: **18.06.2003**
(21) Numéro de dépôt: 00905127.7
(22) Date de dépôt: 14.02.2000
(51) Int. Cl.: C22F 1/18, C22C 16/00, G21C 3/07

(54) **PROCEDE DE FABRICATION D'ELEMENTS MINCES EN ALLIAGE A BASE DE ZIRCONIUM ET PLAQUETTES AINSI REALISEES**
VERFAHREN ZUR HERSTELLUNG VON DÜNNEN ELEMENTEN AUS ZIRKONLEGIERUNG UND NACH DEM VERFAHREN HERGESTELLTE PLÄTTCHEN
METHOD FOR MAKING THIN ZIRCONIUM ALLOY ELEMENTS AND WAFERS OBTAINED

(30) Priorité: 15.02.1999 FR 9901777; 30.03.1999 FR 9903955
(43) Date de publication de la demande: 14.11.2001
(73) Titulaire: Framatome ANP, 92400 Courbevoie (FR); Compagnie Européenne du Zirconium - CEZUS, 92400 Courbevoie (FR)
(72) Inventeur: DIZ, Jésus, F-69003 Lyon (FR); BUNEL, Gérard, F-61370 Echauffour (FR)
(74) Mandataire: Jacobson, Claude
(86) Numéro de dépôt international: FR0000357
(87) Numéro de publication internationale: WO00048199

(56) Documents cités:
- EP-A- 0 246 986
- EP-A- 0 720 177
- FR-A- 2 575 764
- FR-A- 2 624 136
- US-A- 4 992 240
- PATENT ABSTRACTS OF JAPAN vol. 008, no. 110 (C-224), 23 mai 1984 (1984-05-23) & JP 59 025963 A (SUMITOMO KINZOKU KOGYO KK), 10 février 1984 (1984-02-10)

## Description

L'invention concerne les procédés de fabrication d'éléments minces en alliage à base de zirconium destinés à être utilisés dans les réacteurs nucléaires refroidis par l'eau et notamment, parmi eux, dans les réacteurs, à eau sous pression.

L'invention trouve une application particulièrement importante dans la fabrication de feuillards destinés à être découpés pour constituer des éléments de structure du squelette d'un assemblage combustible nucléaire et notamment pour constituer des plaquettes de grilles d'entretoisement des crayons de combustible.

On demande à de teLs éléments de structure de présenter à la fois une bonne résistance au réfrigérant, constitué par un milieu aqueux à haute température, une faible croissance libre dans la direction de la grande dimension de l'élément et un fluage réduit dans le cas d'éléments soumis à des contraintes. De plus, le procédé de fabrication ne doit pas conduire à un taux de rebut élevé.

L'invention vise notamment à fournir un procédé permettant d'atteindre ces objectifs notamment en évitant la présence de la phase βZr qui a un effet défavorable en matière d'oxydation. Elle vise également, à titre accessoire, à fournir un procédé mettant en oeuvre un alliage à base de zirconium pouvant également être utilisé pour constituer des tubes de gainage, qui sont en contact non seulement avec le milieu aqueux, mais aussi avec le combustible.

On a déjà proposé (EP-A-0 720 177) des tubes en alliage à base de zirconium contenant également 50 à 250 ppm de fer, 0,8 à 1,3 % en poids de niobium, moins de 1600 ppm d'oxygène, moins de 200 ppm de carbone et moins de 120 ppm de silicium. Un tel alliage est filé puis laminé à froid en au moins quatre passes (le terme « laminage » désignant, en matière de tube, un passage sur un mandrin contre lequel l'ébauche est pressée par des galets en forme), en plusieurs passes, avec des traitements thermiques intermédiaires entre 560°C et 620°C.

A ces températures relativement basses, avantageuses du point de vue de la résistance à la corrosion, la recristallisation de l'alliage, nécessaire pour effectuer dans de bonnes conditions la passe de laminage suivante, requiert un temps important.

Un procédé suivant l'invention permet de réaliser des éléments de structure minces et plats par un procédé susceptible d'être mis en oeuvre sur une ligne continue. Suivant ce procédé, on constitue une ébauche en un alliage à base de zirconium consistant en poids, en plus des impuretés inévitables, 0,8 à 1,3 % de niobium, 500 à 2000 ppm d'oxygène, 5 à 35 ppm de soufre, et optionnellement du Fe, Cr et V à une teneur totale inférieure à 0,25 % et de l'étain à une teneur inférieure à 300 ppm. Une ébauche, résultant d'une trempe β et d'un laminage à chaud, est laminée en au moins trois passes de laminage à froid avec des traitements thermiques intermédiaires de recuit,
l'un de ces traitements thermiques intermédiaires ou un traitement thermique préalable avant la première passe de laminage à froid étant effectué pendant une durée longue, d'au moins 2 heures à une température comprise entre 520°C et 600°C, et
tous les traitements thermiques éventuels qui suivent le traitement long étant effectués à une température inférieure à 620°C, généralement entre 610 et 620°C, pendant au plus 15 mn, en général 2 à 10 mn.

Souvent on utilisera 1100 à 1800 ppm d'oxygène et 10 à 35 ppm de soufre.

Un intérêt des traitements "courts" de 15 mn au plus est qu'ils peuvent être effectués dans des fours au défilé. Mais ils peuvent être à une température faisant apparaître la phase βZr, puisque cette phase sera éliminée par le traitement "long".

Dans un premier mode de réalisation, le nombre de passes de laminage à froid est de trois seulement. Le premier traitement thermique intermédiaire est à une température dépassant 620°C, faisant apparaître la phase βZr, et de courte durée, compatible avec l'emploi de fours au défilé. En revanche, le traitement qui précède immédiatement le laminage final, est à basse température, inférieure à 600°C et d'une durée dépassant 2 heures, pouvant être effectué sous un four sous cloche. Cette opération élimine en quasi-totalité la phase βZr. Un traitement à moins de 560°C est notamment possible, avec une durée qui dépasse alors 5 heures.

Dans un second mode de réalisation, on effectue quatre passes de laminage à froid avec des recuits intermédiaires courts entre les deux premières ou trois premières passes à une température conduisant à l'apparition de la phase βZr. La phase βZr est ensuite éliminée par un recuit long (plus de 2 heures) à une température inférieure à 600°C avant le dernier ou l'avant dernier laminage, suivant le cas. Un recuit de plus de 5 heures à moins de 560°C permet d'atteindre un résultat similaire.

Dans un autre cas encore, le procédé comporte quatre passes (ou davantage) de laminage à froid et le traitement de longue durée à température inférieure à 600°C (souvent à moins de 560°C) est effectué immédiatement après laminage à chaud. Tous les recuits ultérieurs sont à moins de 620°C, courts (moins de 15 mn), et effectués dans un four au défilé.

Dans tous les cas, on effectue une opération finale de recuit de recristallisation à une température suffisamment basse pour éviter de faire apparaître la phase βZr, c'est-à-dire au-dessous de 620°C.

L'élément mince ainsi obtenu constitue un feuillard qui ne subit plus de traitement thermo métallurgique avant utilisation, mais simplement des opérations de planage, de décapage, de contrôle et enfin de découpe.

La fabrication peut être effectuée avec des fours de recuit au défilé pour tous les traitements thermiques courts à température élevée. Le recuit d'élimination de la phase βZr nécessite seul une durée de plusieurs heures, typiquement 5 à 15h entre 520 et 580°C, par exemple dans un four à cloche.

L'ensemble des traitements thermiques est effectué en atmosphère inerte ou sous vide.

La présence de soufre à faible teneur améliore le fluage à chaud en milieu aqueux. Une teneur en oxygène comprise entre 1000 et 1600 ppm est avantageuse. Elle peut être ajustée par addition délibérée et contrôlée de zircone.

L'alliage utilisé se prête également à la constitution de gaines par un procédé impliquant plusieurs passes de laminage dans un laminoir à galets et à pas de pèlerin, cette fois avec des traitements thermiques intermédiaires longs à température suffisamment basse pour ne pas faire apparaître la phase βZr.

Le même alliage contenant 5 à 35 ppm de soufre (notamment 10 à 35 ppm) permet en conséquence de constituer, à partir de lingots de même composition, aussi bien des composants plats découpés dans un feuillard que des tubes de gainage ou des tubes guides d'assemblage combustible nucléaire.

Les caractéristiques ci-dessus, ainsi que d'autres, apparaîtront mieux à la lecture de la description qui suit de modes particuliers de réalisation, donnés à titre d'exemples non limitatifs. La description se réfère aux dessins qui l'accompagnent, dans lesquels :
- les figures 1 à 3 sont des organigrammes de fabrication de feuillards destinés à des plaquettes de grilles d'assemblage combustible nucléaire ;
- la figure 4 montre schématiquement un fragment de plaquette de grille réalisable conformément à l'invention.

Le procédé dont les étapes sont illustrées sur les figures a été utilisé pour constituer des feuillards de 0,4 mm et 0,6 mm d'épaisseur destinés à constituer, par découpage et emboutissage à la presse, des plaquettes de grilles ayant des ouvertures de réception de ressort, du genre montré par exemple en figure 4. Toutefois les ressorts peuvent être constitués par des parties embouties des plaquettes.

Le procédé de fabrication comporte d'abord la coulée d'un lingot ayant la composition requise. Les hétérogénéités conduisent dans certains cas à un lingot dont des fractions, notamment les extrémités et quelquefois les parties périphériques, ont une teneur qui sort des fourchettes autorisées. Dans ce cas, les parties correspondantes sont ôtées par découpe.

Les produits étudiés constituent des exemples particuliers, pour lesquels on a obtenu une teneur en niobium comprise entre 1,01 et 1,03 %, une teneur en soufre comprise entre 15 et 28 ppm et une teneur en oxygène de 1280 à 1390 ppm. Pour tous les autres éléments présents à titre d'impuretés, les teneurs étaient inférieures aux valeurs suivantes :

| ELEMENT | | max.(ppm) | ELEMENT | | max.(ppm) |
|---|---|---|---|---|---|
| Aluminium | Al | 75 | Magnésium | Mg | 20 |
| Azote | N | 80 | Manganèse | Mn | 50 |
| Bore | B | 0,5 | Molybdène | Mo | 50 |
| Cadmium | Cd | 0,5 | Nickel | Ni | 70 |
| Calcium | Ca | 30 | Phosphore | P | 20 |
| Carbone | C | 100 | Plomb | Pb | 130 |
| Chlore | Cl | 20 | Silicium | Si | 120 |
| Chrome | Cr | 150 | Sodium | Na | 20 |
| Cobalt | Co | 10 | Tantale | Ta | 100 |
| Cuivre | Cu | 50 | Titane | Ti | 50 |
| Etain | Sn | 100 | Tungstène | W | 100 |
| Fer | Fe | 500 | Uranium total | U | 3,5 |
| Hafnium | Hf | 100 | Vanadium | V | 50 |
| Hydrogène | H | 25 | | | |

A partir d'un lingot, on fabrique, par laminage, un larget épais, dont l'épaisseur était de 100 mm dans le cas étudié. Un laminage 10 effectué à chaud, généralement entre 930 et 960°C, ramène ce larget à une épaisseur de 30 mm. Après laminage, le produit est soumis à une trempe β 12, généralement à partir d'une température comprise entre 1000°C et 1200°C donnant une ébauche. L'ébauche est ensuite soumise à un nouveau laminage à chaud 14, typiquement entre 770 et 790°C.

Toutes ces opérations sont communes à tous les modes d'exécution de l'invention.

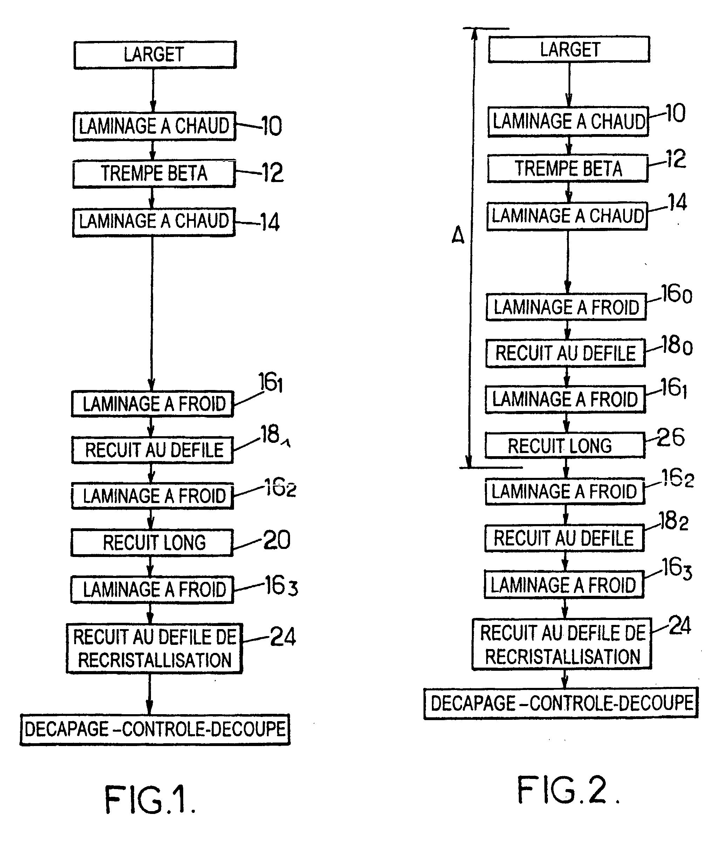

### Exemple 1 (figure 1)

Dans ce cas, trois laminages à froid sont effectués. Le laminage à chaud 14 est suivi de deux premiers laminages à froid 16₁ et 16₂ entre lesquels est effectuée une opération de recuit 18₁ dans un four de recuit au défilé qui ne permet qu'un maintien en température ne dépassant pas 15 mn, généralement de deux à dix minutes environ. Cela impose une température élevée, comprise entre 690°C et 710°C - c'est-à-dire au-dessus de la température de transition α/α,β. Le passage à ces températures élevées conduit à l'apparition de phases βZr, qui doivent être éliminées de façon quasi-complète ultérieurement pour améliorer la résistance à l'oxydation du feuillard.

Le recuit 18₁ a été effectué à 700°C environ pendant une durée de l'ordre de 4 mn.

En revanche, le recuit 20 d'élimination de la phase βZr a été effectué en four sous cloche pendant 10 à 12 heures, hors ligne, à une température nominale de 550°C.

Le laminage final à froid 16₃ est suivi d'un recuit de recristallisation 24, effectué au-dessous de 620°C pour ne pas faire apparaître une teneur significative en phase βZr. Dans la pratique, ce recuit peut s'effectuer au défilé, par maintien pendant deux à dix minutes de 610°C à 620°C.

Le feuillard obtenu à l'issue du recuit 24 est utilisé sans nouveau traitement thermique. Il est soumis aux opérations habituelles de décapage et de contrôle, puis découpé et embouti pour y former des ressorts si nécessaire ou y placer des ressorts rapportés en un autre matériau tel qu'un alliage à base de nickel.

### Exemple 2 (figure 2)

Le processus de l'exemple 2 comporte quatre passes de laminage à froid. Il a été utilisé pour constituer des feuillards de 0,425 et 0,6 mm d'épaisseur.

Pour l'une et l'autre des épaisseurs recherchées, quatre passes de laminage à froid 16₀, 16₁, 16₂ et 16₃ ont été effectuées. Les recuits au défilé intermédiaire 18₀ sont effectués à 700°C. Mais cette fois, le traitement thermique long à basse température 26 (au-dessous de 560°C) précède les deux derniers laminages à froid 16₂ et 16₃. Le traitement thermique 18₂ est à moins de 620°C, par exemple à une température nominale de 610°C, pendant quelques minutes. Le recuit final de recristallisation 24 peut encore être effectué à 615°C pendant quelques minutes, dans un four au défilé.

Toutes les opérations indiquées en A sur la figure 2 sont les mêmes pour les deux épaisseurs finales recherchées. Les passes suivantes de laminage à froid sont effectuées avec des taux de corroyage adaptés.

Dans une variante, c'est le laminage à froid 162 qui est suivi du recuit destiné à éliminer de façon quasi complète la phase βZr. Pour cela, le recuit est effectué au-dessous de 600°C. Un recuit de 5 à 15 heures, de 520°C à 580°C, donne de bons résultats.

Le processus ci-dessus est susceptible de variantes. Le nombre de passes de laminage à froid peut être accru. Le recuit 26 d'élimination de la phase βZr peut être effectué à une température d'autant plus faible que la durée est plus longue.

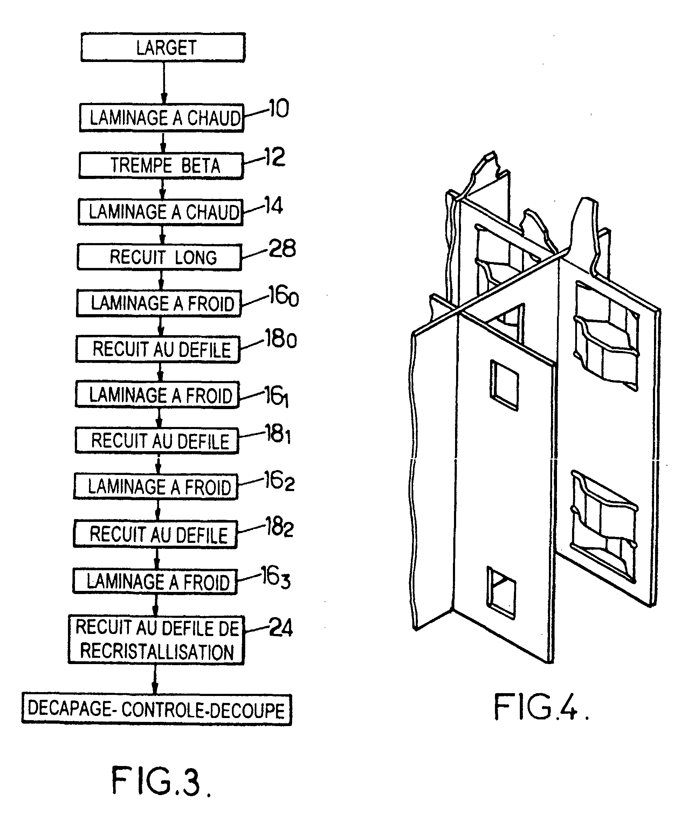

### Exemple 3 (figure 3)

Dans un autre mode de réalisation encore, quatre passes de laminage à froid sont prévues. Mais le recuit 28 à basse température et de longue durée d'élimination de la phase βZr précède les laminages à froid. Dans ce cas, on a notamment utilisé les températures suivantes (les références étant celles de la figure 3) :

| | |
|---|---|
| Laminage à chaud 14 | 770 - 790°C |
| | |
| Recuit long 28 d'élimination de βZr | 550°C (au-dessous de la température de changement de phase) pendant 10 à 12 heures |
| | |
| Recuits au défilé 18₀, 18₁, 18₂ | 610°C à une vitesse de 0,6 à 1 m/mn, conduisant à une durée d'environ 3 à 4 mn, |
| | |
| Recuit 24 | 615°C, pendant quelques minutes, au défilé |

Les feuillards obtenus par le procédé suivant l'invention ont été soumis à des examens métallurgiques et à des essais.

La répartition des précipités intermétalliques est fine et uniforme. Les examens au microscope électronique montrent quelques alignements de précipités βNb dus aux recuits 18₀, 18₁ et 18₂. En revanche, les précipités de βZr sont à l'état de traces et isolés.

Les facteurs. de Kearns relevés, pour le feuillard de 0,425 mm d'épaisseur, sont de 0,09 en direction longitudinale de laminage, 0,23 en travers et 0,68 en direction normale : ils sont très comparables à ceux du Zircaloy 4 recristallisé. Des essais ont été effectués pour déterminer la corrosion uniforme sous irradiation.

L'épaisseur maximum d'oxyde formé pour un taux d'épuisement (burn-up) de 62 GWj/t reste inférieure à 27 µm, plus faible que sur des tubes guides en Zircaloy 4 recristallisé et sur du feuillard en Zircaloy-4 détendu.

La croissance libre des feuillards fabriqués par le procédé, mesurée à 350°C, est très proche de celle du Zircaloy 4 jusqu'à une fluence de 6.10E20 n.cm⁻² environ. A partir de cette valeur on constate un phénomène de saturation tel que la croissance libre est à peu près moitié de celle du Zircaloy 4 pour une fluence de 25.10E20 n.cm⁻².

L'amélioration en hydruration par rapport au Zircaloy 4 est également très significative, puisque le facteur d'hydrogène absorbé est réduit de moitié environ.

Lorsque l'on souhaite utiliser le même alliage pour fabriquer des gaines et des plaquettes, il est avantageux d'incorporer à l'alliage 0,03 à 0,25 % au total de fer d'une part, de l'un au moins du chrome et du vanadium d'autre part. Le rapport Fe/(Cr+V) est avantageusement alors d'au moins 0,5. Il peut également être utile d'ajouter de l'étain pour améliorer la tenue des gaines en milieu lithié.

On voit qu'il est possible de placer le traitement thermique long à différentes étapes du cycle de fabrication, à la seule condition de ne prévoir aucun traitement ultérieur à une température susceptible de faire apparaître la phase βZr.

## Revendications

1. Procédé de fabrication d'éléments minces plats, suivant lequel on constitue une ébauche en un alliage consistant, en poids, en plus du zirconium et des impuretés inévitables, en 0,8 à 1,3 % de niobium, 500 à 2000 ppm d'oxygène, et 5 à 35 ppm de soufre et optionnellement jusqu'à 0,25 % de Fe+Cr+V et jusqu'à 300 ppm d'étain ; on effectue une trempe β et un laminage à chaud pour obtenir une ébauche et on la lamine en au moins trois passes de laminage à froid avec des traitements thermiques intermédiaires de recuit,
l'un de ces traitements thermiques intermédiaires ou un traitement thermique préalable avant la première passe de laminage à froid étant effectué pendant une durée longue, d'au moins 2 heures, à une température comprise entre 520°C et 600°C, et
tous les traitements thermiques éventuels qui suivent le traitement long étant effectués à une température inférieure à 620°C pendant au plus 15 mn.

2. Procédé selon la revendication 1, **caractérisé en ce que** le nombre de passes de laminage à froid est de trois, le premier traitement thermique étant à une température dépassant 620°C et de courte durée, tandis que le traitement qui précède immédiatement le laminage final est à une température inférieure à 600°C, et a une durée dépassant 2 heures.

3. Procédé selon la revendication 2, **caractérisé en ce qu'**on effectue le premier traitement thermique à une température comprise entre 690°C et 710°C en moins de 15 mn.

4. Procédé selon la revendication 1, **caractérisé en ce qu'**on effectue quatre passes de laminage à froid avec des recuits intermédiaires courts avant les deux ou trois premières passes de laminage à froid, à une température dépassant 620°C conduisant à l'apparition de la phase βZr, puis le recuit long de plus de 2 heures à une température inférieure à 600°C avant le dernier laminage ou l'avant dernier suivant le cas.

5. Procédé suivant la revendication 1, **caractérisé en ce qu'**il comporte au moins quatre passes de laminage à froid et le traitement de longue durée à température inférieure à 600°C est effectué immédiatement après le laminage à chaud.

6. Procédé suivant l'une quelconque des revendications précédentes, **caractérisé par** une opération finale de recuit de recristallisation à une température inférieure à 620°C, suffisamment basse pour ne pas faire apparaître la phase βZr.

7. Procédé selon la revendication 6, **caractérisé en ce que** le recuit final de recristallisation est effectué entre 610°C et 620°C pendant 2 à 10 mn.

8. Procédé selon l'une quelconque des revendications précédentes, **caractérisé en ce que** les recuits courts sont effectués dans un four au défilé.

9. Procédé selon l'une quelconque des revendications précédentes, **caractérisé en ce que** l'alliage contient 1100 à 1800 ppm d'oxygène et 10 à 35 ppm de soufre.

10. Procédé selon l'une quelconque des revendications précédentes, **caractérisé en ce que** l'un des traitements thermiques est effectué pendant une durée longue d'au moins 5 heures à une température inférieure à 560°C.

11. Procédé selon l'une quelconque des revendications précédentes, **caractérisé en ce que** le traitement qui précède immédiatement le laminage final est à une température inférieure à 560°C, et à une durée dépassant 5 heures.

12. Procédé selon l'une quelconque des revendications précédentes, **caractérisé en ce que** le fer, le chrome, le vanadium et l'étain ne sont présents qu'à l'état d'impuretés.

13. Procédé de fabrication de plaquette mince de grille d'assemblage combustible nucléaire, **caractérisé en ce qu'**on constitue un élément mince par le procédé suivant l'une quelconque des revendications 1 à 12 et **en ce qu'**on découpe et emboutit la plaquette dans un tel élément.

## Claims

1. Process for manufacturing flat thin components, in which a blank made of an alloy consisting, by weight, besides zirconium and the inevitable impurities, of 0.8 to 1.3% niobium, 500 to 2000 ppm oxygen and 5 to 35 ppm sulphur and, optionally, up to 0.25% Fe+Cr+V and up to 300 ppm tin; a β hardening operation and a hot-rolling pass are carried out in order to obtain a blank and the blank is rolled in at least three cold-rolling passes with intermediate annealing heat treatments,
one of these intermediate heat treatments or a prior heat treatment before the first cold-rolling pass being carried out for a long time, of at least 2 hours, at a temperature of between 520°C and 600°C and
all the optional heat treatments which follow the long treatment being carried out at a temperature below 620°C for at most 15 min.

2. Process according to Claim 1, **characterized in that** the number of cold-rolling passes is three, the first heat treatment being at a temperature exceeding 620°C and of short duration, whereas the treatment which immediately precedes the final rolling pass is at a temperature below 600°C and has a duration exceeding 2 hours.

3. Process according to Claim 2, **characterized in that** the first heat treatment is carried out at a temperature of between 690°C and 710°C in less than 15 min.

4. Process according to Claim 1, **characterized in that** four cold-rolling passes are carried out with short intermediate annealing operations before the first two or three cold-rolling passes, at a temperature exceeding 620°C, resulting in the appearance of the βZr phase, then the long annealing operation for more than 2 hours at a temperature below 600°C before the final rolling pass or the penultimate one depending on the case.

5. Process according to Claim 1, **characterized in that** it includes at least four cold-rolling passes and the treatment of long duration at a temperature below 600°C is carried out immediately after the hot rolling.

6. Process according to any one of the preceding claims, **characterized by** a final recrystallization annealing operation at a temperature below 620°C, low enough not to make the βZr phase appear.

7. Process according to Claim 6, **characterized in that** the final recrystallization annealing is carried out between 610°C and 620°C for 2 to 10 min.

8. Process according to any one of the preceding claims, **characterized in that** the short annealing operations are carried out in a continuous furnace.

9. Process according to any one of the preceding claims, **characterized in that** the alloy contains 1100 to 1800 ppm oxygen and 10 to 35 ppm sulphur.

10. Process according to any one of the preceding claims, **characterized in that** one of the heat treatments is carried out for a long time, of at least 5 hours, at a temperature below 560°C.

11. Process according to any one of the preceding claims, **characterized in that** the treatment which immediately precedes the final rolling pass is at a temperature below 560°C and for a time exceeding 5 hours.

12. Process according to any one of the preceding claims, **characterized in that** iron, chromium, vanadium and tin are present only in the state of impurities.

13. Process for manufacturing a thin nuclear-fuel assembly grid strap, **characterized in that** a thin component is formed by the process according to any one of Claims 1 to 12 and **in that** the strap is cut and drawn from such a component.

## Patentansprüche

1. Herstellungsverfahren dünner bzw. flacher Elemente, gemäß dem man ein Vorprodukt aus eine konsistenten Legierung bildet, die in Gewichtsanteilen, zusätzlich zu dem Zirkonium und den unvermeidlichen Verunreinigungen, 0,8 bis 1,3 % Niobium, 500 bis 2000 ppm Sauerstoff, und 5 bis 35 ppm Schwefel und optional bis 0,25 % Fe+Cr+V und bis zu 300 ppm Zinn enthält, wobei man ein β-Abschrecken und ein Warmwalzen durchführt, um ein Vorprodukt herzustellen, das man wenigstens drei Kaltwalzstichen unterzieht, mit thermischen Zwischenglühbehandlungen.
wobei eine dieser thermischen Zwischenbehandlungen oder eine thermische Vorbehandlung, vor dem ersten Kaltwalzstich, während einer langen Zeitspanne von wenigstens zwei Stunden durchgeführt wird, bei einer zwischen 520°C und 600°C enthaltenen Temperatur, und
alle der langen Behandlung folgenden thermischen Behandlungen bei einer Temperatur unter 620°C während höchstens 15 Minuten durchgeführt werden.

2. Verfahren nach Anspruch 1, **dadurch gekennzeichnet, dass** die Anzahl der Kaitwalzstiche drei beträgt, die erste thermische Behandlung bei 620°C stattfindet und von kurzer Dauer ist, während die Behandlung, die dem Endwalzstich unmittelbar vorausgeht, bei einer Temperatur von weniger als 600°C stattfindet und sich über mehr als 2 Stunden erstreckt.

3. Verfahren nach Anspruch 2, **dadurch gekennzeichnet, dass** die erste thermische Behandlung bei einer Temperatur zwischen 690°C und 710°C in weniger als 15 Minuten durchgeführt wird.

4. Verfahren nach Anspruch 1, **dadurch gekennzeichnet, dass** man vor den zwei oder drei ersten Kaltwalzstichen vier Kaltwalzstiche mit kurzem Zwischenglühen bei einer Temperatur über 620°C durchführt, was zum Eintreten der βZr-Phase führt, und man dann vor dem letzten oder je nach Fall vorletzten Walzen ein langes Glühen von mehr als 2 Stunden bei einer Temperatur unter 600°C durchführt.

5. Verfahren nach Anspruch 1, **dadurch gekennzeichnet, dass** es wenigstens vier Kaltwalzstiche umfasst und die lange Behandlung mit der Temperatur unter 600°C unmittelbar nach dem Warmwalzen erfolgt.

6. Verfahren nach einem der vorangehenden Ansprüche, **gekennzeichnet durch** eine finale Rekristallisationsoperation bei einer Temperatur unter 620°C, ausreichend niedrig, um die βZr-Phase nicht eintreten zu lassen.

7. Verfahren nach Anspruch 6, **dadurch gekennzeichnet, dass** das finale Rekristallisationsglühen 2 bis 10 Minuten lang zwischen 610°C und 620°C durchgeführt wird.

8. Verfahren nach einem der vorangehenden Ansprüche, **dadurch gekennzeichnet, dass** die kurzen Glühungen in einem Durchlaufofen erfolgen.

9. Verfahren nach einem der vorangehenden Ansprüche, **dadurch gekennzeichnet, dass** die Legierung 1100 bis 1800 ppm Sauerstoff und 10 bis 35 ppm Schwefel enthält.

10. Verfahren nach einem der vorangehenden Ansprüche, **dadurch gekennzeichnet, dass** eine der Wärmebehandlungen während einer Zeitspanne von wenigstens 5 Stunden bei einer Temperatur unter 560°C erfolgt.

11. Verfahren nach einem der vorangehenden Ansprüche, **dadurch gekennzeichnet, dass** die dem Endwalzen unmittelbar vorausgehende Behandlung mit einer Dauer von mehr als 5 Stunden bei einer Temperatur unter 560°C erfolgt.

12. Verfahren nach einem der vorangehenden Ansprüche, **dadurch gekennzeichnet, dass** Eisen, Chrom, Vanadium und Zinn nur in Form von Verunreinigungen vorhanden sind.

13. Verfahren zur Herstellung dünner Kemreaktor-Brennstabbündel-Gitterplatten, **dadurch gekennzeichnet, dass** man durch das Verfahren nach einem der Ansprüche 1 bis 12 ein dünnes Element bildet und dass man die Platte in einem solchen Element zuschneidet und zieht.
